Europäisches Patentamt

European Patent Office

Office européen des brevets

(19)

(11) EP 0 452 064 B1

(12) EUROPEAN PATENT SPECIFICATION

(45) Date of publication and mention
of the grant of the patent:
**27.12.1996 Bulletin 1996/52**

(51) Int Cl.$^6$: **G11B 20/10**, H04L 25/497,
H04L 25/30, H04N 5/91,
G11B 20/18

(21) Application number: **91303071.4**

(22) Date of filing: **08.04.1991**

(54) **Apparatus for detecting digital data**

Gerät zur Detektion von digitalen Daten

Appareil pour détecter des données digitales

(84) Designated Contracting States:
**DE FR GB NL**

(30) Priority: **11.04.1990 JP 95653/90**

(43) Date of publication of application:
**16.10.1991 Bulletin 1991/42**

(73) Proprietor: **SONY CORPORATION**
**Tokyo 141 (JP)**

(72) Inventors:
• **Inoue, Hajime**
 **Shinagawa-ku Tokyo 141 (JP)**
• **Seki, Takahito**
 **Shinagawa-ku Tokyo 141 (JP)**
• **Kanota, Keiji**
 **Shinagawa-ku Tokyo 141 (JP)**

(74) Representative: **Pilch, Adam John Michael et al**
**D. YOUNG & CO.,**
**21 New Fetter Lane**
**London EC4A 1DA (GB)**

(56) References cited:
**EP-A- 0 343 929**

• **IEEE TRANSACTIONS ON CONSUMER**
 **ELECTRONICS vol. 34, no. 3, August 1988, NEW**
 **YORK, US pages 588 - 595 , XP000111199 C.**
 **YAMAMITSU ET AL. 'An experimental study on**
 **bit rate reduction and high density recording for**
 **a home-use digital VTR'**
• **IEEE TRANSACTIONS ON COMMUNICATIONS**
 **vol. 34, no. 5, May 1986, NEW YORK pages 454 -**
 **461 R.W. WOOD AND D. A. PETERSEN 'Viterbi**
 **detection of class IV Partial Response on a**
 **magentic recording channel'**

## Description

This invention relates to apparatus for detecting digital data, and more particularly but not exclusively, is directed to apparatus for detecting digital data for use in a video tape recorder which uses class IV or other partial response signalling in high density digital tape recording and reproducing.

Digital video tape recorders (VTRs) have been developed to record a video signal in the form of a digital signal on a magnetic tape such that deterioration of image quality in the dubbing mode can be minimised.

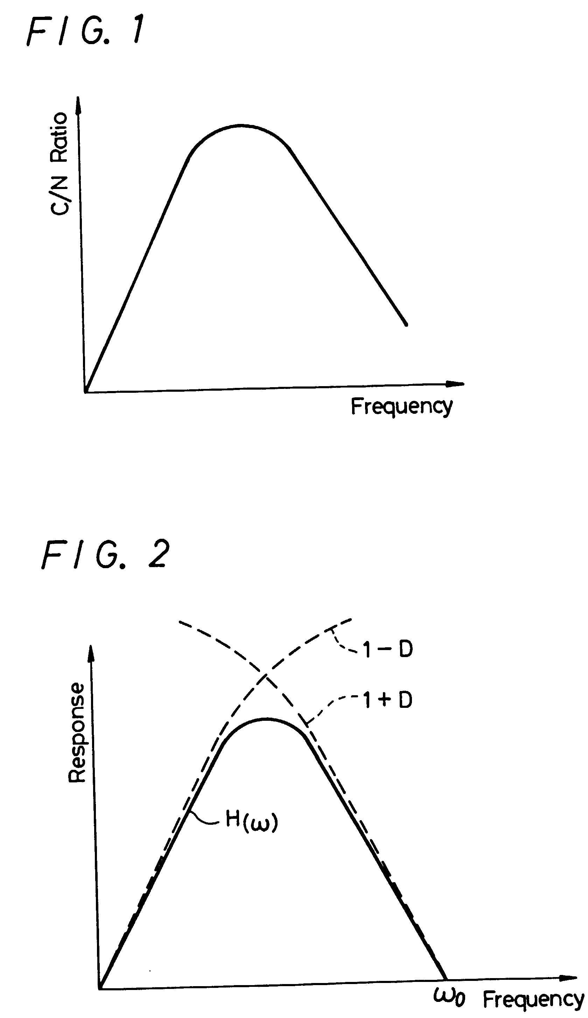

When a signal is recorded on and/or reproduced from a magnetic tape, the electromagnetic transducing system used therefor (such as a magnetic head or the like) has a differentiation characteristic so that the carrier-to-noise (C/N) ratio is degraded at lower frequencies. The C/N ratio will be similarly degraded due to a magnetisation characteristic of the magnetic tape itself, as shown in Figure 1 of the accompanying drawings, if the frequency is increased.

Accordingly, when using a magnetic recording and/or reproducing system for a digitised video signal (hereinafter referred to as a digital video signal), the frequency band in which a satisfactory C/N ratio can be obtained is relatively narrow. For this reason, when a digital video signal is to be detected, a detection system is employed having a signal spectrum concentrated near a region in which the C/N ratio is maximised, so as to effectively avoid deterioration of the C/N ratio of the reproduced signal, and thereby ensure that the digital video signal will be recorded and/or reproduced efficiently. In connection with the foregoing, it has been proposed to utilise a class IV partial response scheme in the reproduction and detection of a digital video signal, for example, as disclosed in US Patent Nos. US-A-4 504 872 and US-A-4 984 099 both assigned to the present applicants.

More specifically, since the C/N ratio in a magnetic recording and/or reproducing system is degraded at the lower and higher frequencies, its frequency characteristic can be approximated by a frequency characteristic $H(\omega)$ of a class IV partial response $(1 - D^2)$ scheme expressed by using a delay operator D, as shown in Figure 2 of the accompanying drawings.

The Nyquist frequency $\omega_0$ at which the response is minimised has a relation to the delay time T imposed by the delay operator D as expressed in the following equation:

$$\omega_0 = \frac{\pi}{T} \tag{1}$$

Accordingly, if the amount of delay imposed by the delay operator D is selected so that the signal spectrum is concentrated near the region in which the C/N ratio is maximised, then the digital video signal can be recorded and/or reproduced efficiently by effectively utilising the frequency characteristic of the magnetic recording and/or reproducing system.

In other words, in the recording mode, a calculation process corresponding to the following expression (2) is sequentially performed on the digital video signal:

$$\left[ \frac{1}{1 - D^2} \right] \text{MOD2} \qquad \ldots\ldots (2)$$

where MOD2 represents the remainder of 2.

Further, since the electromagnetic transducing system (for example, a magnetic head) has a differentiation characteristic, a reproduced signal from the magnetic head has a characteristic expressed as (1 - D) with reference to the delay operator D and which is shown by the correspondingly labelled dashed line in Figure 2.

Accordingly, in the playback or reproducing mode, a calculation process of (1 + D) is performed on the reproduced signal, whereby the correction expressed by the following equation can be executed:

$$(1 - D) \cdot (1 + D) = 1 - D^2 \tag{3}$$

In view of expression (2) and equation (3), the digital video signal can be reproduced with the transfer function of the recording and reproducing system being substantially maintained at "1".

When the digital video signal is recorded and/or reproduced by making effective use of class IV partial response signalling, a digital video signal having a low bit error rate can be reproduced by the application of the Viterbi decoding technique, which indicates that, as shown in Figure 2, the digital video signal can be efficiently detected by effectively utilising a frequency characteristic nearly equal to the characteristic of Figure 1 which represents the frequency characteristic of the magnetic recording and/or reproducing system.

As disclosed in detail, for example, in "Analog Viterbi Decoding for High Speed Digital Satellite Channels", A.S. Acampora et al., IEEE Transactions on Communications, Vol. Com. - 26, No. 10, October 1978, pages 1463-1470, and in "The Viterbi Algorithm", G.D. Forney, Jr., Proceedings of the IEEE, Vol. 61, No. 3, March 1973, pages 268-278, a Viterbi decoding circuit utilises the likelihood of correlation between data input successively thereto for detecting transit of the data, and decodes the data on the basis of the detected result.

Accordingly, if the relationship $(1 - D^2)$ of the reproduced signal relative to the signal used for recording (hereinafter referred to as the recording signal) is utilised to decode the recording signal from the reproduced signal and then the digital video signal is decoded on the basis of the decoded data, the bit error rate of the decoded data can be reduced as compared with a standard decoding circuit which decodes data with reference to the signal level.

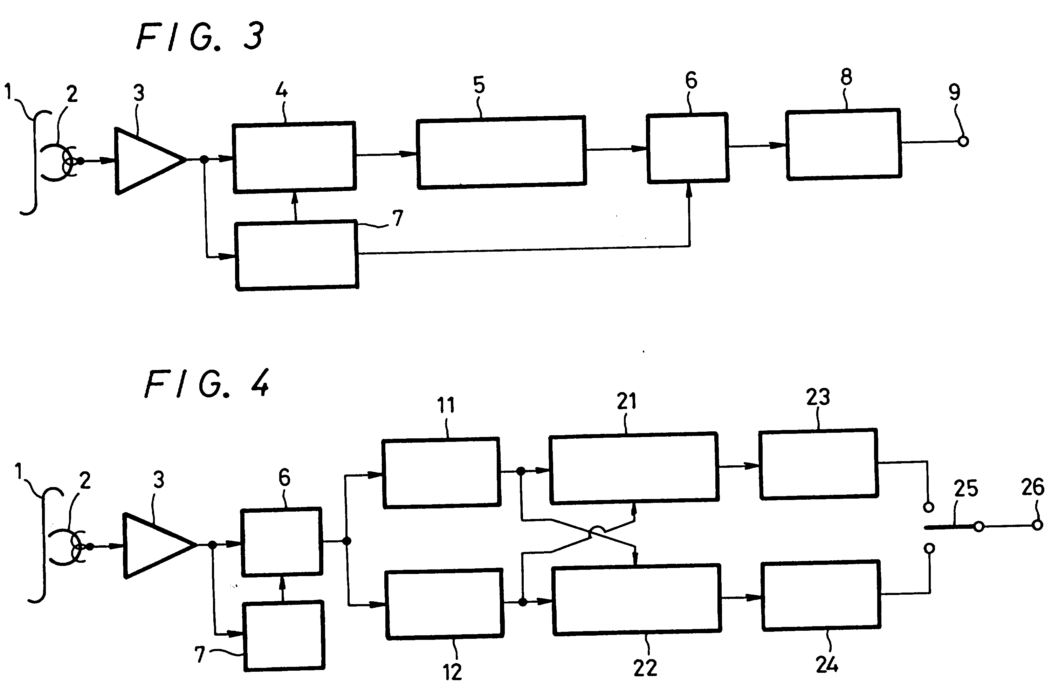

A previously-proposed reproducing circuit of a digital VTR which incorporates class IV partial response and Viterbi decoding schemes will now be described with reference to Figure 3 of the accompanying drawings in which digital video data recorded as a binary signal in analog form on a video tape 1 is reproduced by a magnetic head 2. The reproduced signal is supplied through an amplifier 3 to an equaliser circuit 4, and the equalised reproduced signal from the equaliser circuit 4 is supplied to a processing circuit 5. The processing circuit 5 performs on this reproduced signal the calculation $(1 + D)$ in accordance with the above-mentioned partial response scheme. The resulting output of the processing circuit 5 is supplied to an analog-to-digital (A/D) converter 6. A reproduced clock is generated from the reproduced signal by a phase-locked loop (PLL) circuit 7 also connected to the output of the amplifier 3. This reproduced clock is supplied to the A/D converter 6 which detects digital data from the reproduced signal level on the basis of the reproduced clock. Detected digital data is supplied to a Viterbi decoder circuit 8, in which the data is decoded in accordance with the Viterbi decoding scheme to provide a detected digital video signal. The detected digital video signal is supplied through an output terminal 9 to a reproduced signal processor circuit (not shown) in a succeeding stage.

When the digital video signal is reproduced by the previously-proposed circuit arrangement of Figure 3, the transmission rate of the digital video data is very high so that the clock frequency necessary for processing reproduced data in each of the circuits must be selected to be higher than about 30 MHz. The circuits which are operated at such a high clock frequency require a calculation circuit of a special configuration, which cannot be readily provided in practice. Further, it is preferable that the equaliser circuit 4 and the processing circuit 5 be fabricated as digital circuits because such digital equaliser circuits and digital processing circuits can provide excellent characteristics. However, it is very difficult to operate the equaliser circuit 4 and the processing circuit 5 at any clock frequency higher than about 30 MHz if these circuits 4 and 5 are in digital form. Therefore, in the circuit shown in Figure 3, the equalizer and processing circuits 4 and 5 precede the A/D converter 6 and are not fabricated as digital circuits.

Similarly, in the above US Patent No. US-A-4 504 872, the analog-to-digital conversion follows passage of the reproduced signal through a $1 - D^2$ class IV response filter so that the latter is not fabricated as a digital circuit and, hence, does not provide the advantageous characteristics inherent in digital fabrication.

In IEEE TRANSACTIONS ON COMMUNICATIONS, vol 34, no. 5, May 1986, New York USA, pages 454-461 (R. W. Wood and D. A. Petersen) "Viterbi Detection of Class IV Partial Response on a Magnetic Recording Channel", a technique is disclosed in which data is initially equalised and subjected to a partial response detection scheme. and then subjected to analog to digital conversion; the resulting digital data is split so as to be processed by two Viterbi decoders arranged in parallel.

According to the present invention there is provided apparatus for detecting input digital data, the apparatus comprising:

processing means for processing the digital data in accordance with a predetermined formula;
decoder means for decoding an output of the processing means in accordance with the Viterbi algorithm, the decoder means comprising first and second decoders for odd and even numbered data samples of the digital data; and
means for composing outputs of said decoder means to obtain digital data in one sequence;

characterised in that:

distributing means is provided for distributing said input digital data among first and second channels, respectively for odd and even numbered data samples; and
the processing means comprises first and second processors respectively in said first and second channels for processing the respective data samples in accordance with the predetermined formula using both odd and even

EP 0 452 064 B1

numbered data samples, the opposite sense data samples for each channel being derived from the other channel via crosswise connections between the channels for combination with the sample being processed in the respective channel.

A preferred embodiment of the invention provides an improved apparatus for detecting digital data in which the above-mentioned problems and disadvantages encountered with the previously-proposed systems can be substantially overcome. In the preferred embodiment, when digital data is detected in a digital video tape recorder or the like, the signal processing speed of each of the circuits can be substantially reduced. Also, the circuit arrangement can be simplified so as to be operable by a clock signal of a relatively low frequency.

The invention will now be described by way of example with reference to the accompanying drawings, throughout which like parts are referred to by like references, and in which:

Figures 1 and 2 are frequency characteristic graphs to which reference is made in explaining a previously-proposed partial response scheme;

Figure 3 is a schematic block diagram showing an example of a reproducing circuit of a previously-proposed digital video tape recorder which incorporates a class IV partial response scheme and a Viterbi decoding scheme;

Figure 4 is a schematic block diagram showing an apparatus for detecting digital data according to an embodiment of the present invention;

Figure 5 (formed of Figures 5A and 5B) is a schematic block diagram showing a specific example of a main portion of the apparatus shown in Figure 4; and

Figures 6A to 6C and Figures 7A to 7E are timing charts to which reference is made in explaining the operation of the apparatus shown in Figures 4 and 5.

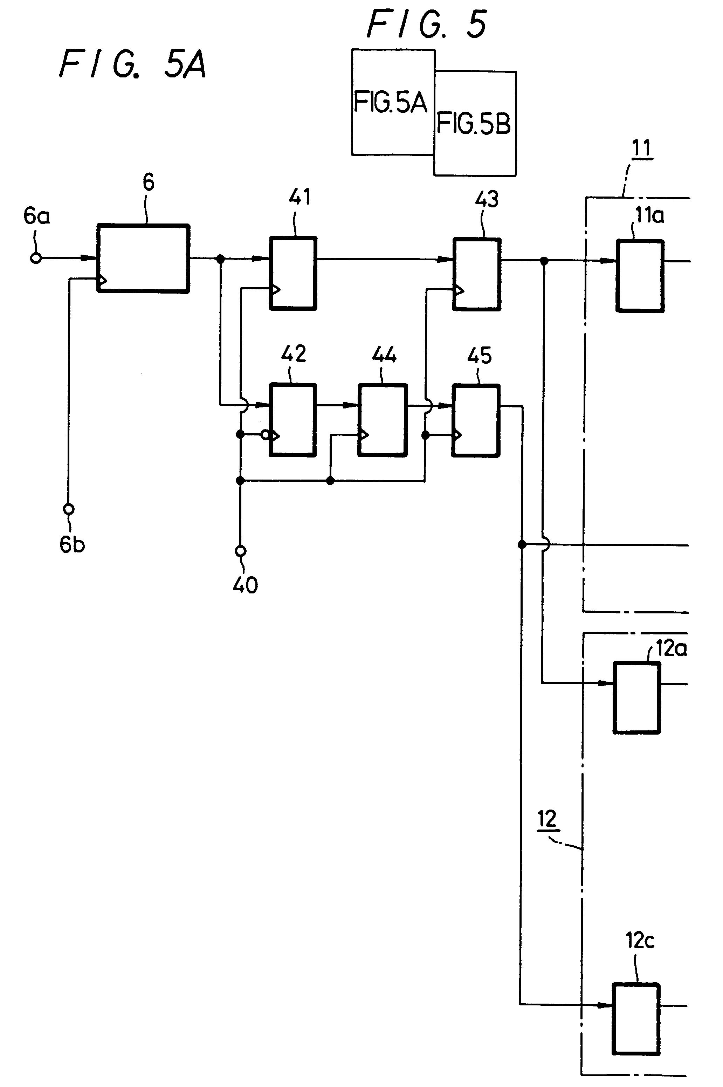

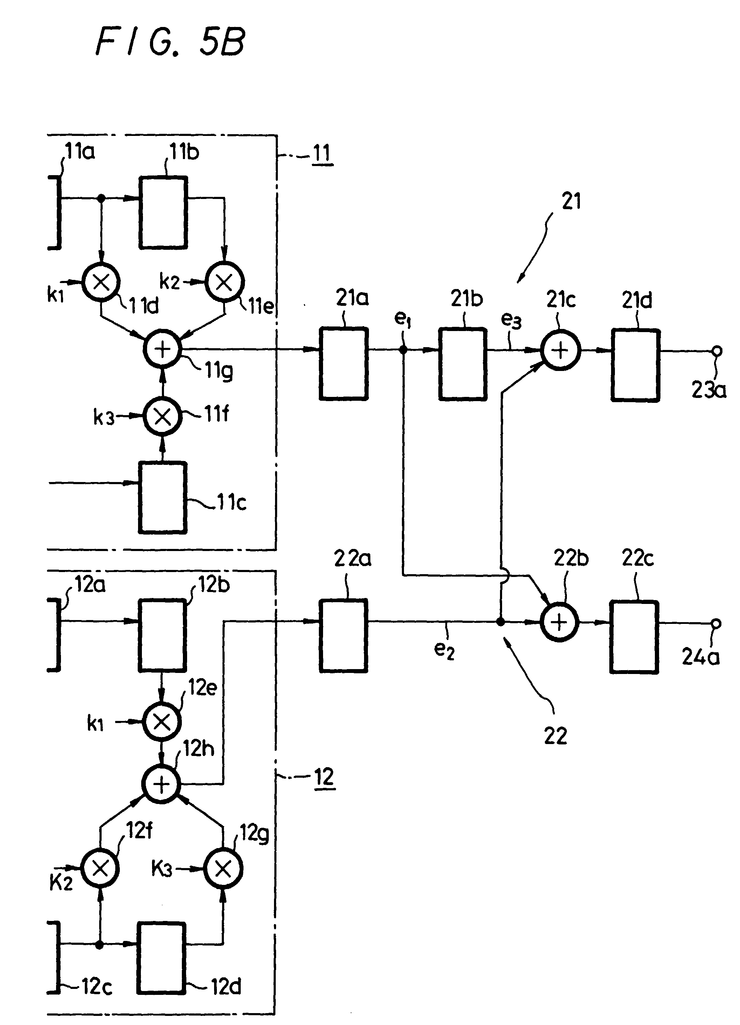

An apparatus for detecting digital data according to an embodiment of the present invention will now be described with reference to Figures 4 and 5, in which parts corresponding to those previously described with reference to Figure 3 are identified by the same reference numerals and therefore will not be again described in detail.

In the preferred embodiment, the invention is applied to a reproducing system of a digital video tape recorder (VTR) in which digital data representing a video signal are recorded as a binary signal in analog form on a magnetic tape. This reproducing system is generally arranged as shown in Figure 4, in which the signal reproduced from the magnetic tape 1 by the magnetic head 2 is supplied through the playback amplifier 3 to the A/D converter 6, and digital data is derived from the reproduced signal by the A/D converter 6 on the basis of the reproduced clock signal supplied thereto from the PLL circuit 7.

Digital data output from the A/D converter 6 are divided into an odd sequence and an even sequence which are then supplied to respective channels containing equaliser circuits 11 and 12. In this embodiment, each of the equaliser circuits 11 and 12 is formed by a transversal filter. Outputs of the equaliser circuits 11 and 12 are supplied to processing circuits 21 and 22 in the respective channels, which perform the (1 + D) calculation on the outputs of the equaliser circuits 11 and 12, respectively, where D is a delay operator. In the embodiment being described, the processing circuit 21 derives the resulting processed data for the odd sequence and the processing circuit 22 derives the resulting processed data for the even sequence.

Outputs of the processing circuits 21 and 22 are supplied to Viterbi decoders 23 and 24, in the respective channels. The Viterbi decoder 23 is operable to Viterbi-decode data of the odd sequence and the Viterbi decoder 24 is operable to Viterbi-decode data of the even sequence. Outputs of the two Viterbi decoders 23 and 24 are supplied to a change-over or composing switch 25. The change-over switch 25 alternately switches the outputs for the odd sequence and the even sequence from the Viterbi decoders 23 and 24 to compose them into data of one sequence, and supplies this data of one sequence to an output terminal 26. Data developed at the output terminal 26 are supplied to a reproduced signal processing circuit (not shown) forming a succeeding stage.

A specific circuit arrangement extending from the A/D converter 6 through to the processing circuits 21 and 22 will now be described with reference to Figures 5A and 5B which together constitute Figure 5.

In the arrangement of Figure 5, the A/D converter 6 detects digital data from the level of a reproduced signal developed at a terminal 6a on the basis of a reproduced clock signal supplied thereto through a terminal 6b from the PLL circuit 7 (Figure 4). The frequency of the reproduced clock signal supplied to the terminal 6b is selected to be 40 MHz.

The output digital data from the A/D converter 6 are supplied to a distributor which includes latch circuits 41 and 42. The latch circuits 41 and 42 latch the digital data on the basis of a clock signal having a frequency of 20 MHz and which is supplied thereto through a terminal 40. The clock signal supplied to the latch circuit 41 and the clock signal supplied to the latch circuit 42 are inverted in phase relative to each other by 180 degrees, so that the latch timings of the latch circuits 41 and 42 are mutually displaced, whereby data of an even sequence is latched by the latch circuit 41 and data of an odd sequence is latched by the latch circuit 42.

4

Data latched by the latch circuit 41 is supplied through a latch circuit 43 functioning as a delay circuit to the equaliser circuits 11 and 12, and data latched by the latch circuit 42 is supplied through latch circuits 44 and 45 arranged in series and also functioning as delay circuits to the equaliser circuits 11 and 12. The 20 MHz clock signal applied to the terminal 40 is also supplied to the latch circuits 43, 44 and 45, so that data are delayed by one clock in each of the latch circuits 43, 44 and 45.

In the equaliser circuit 11, output data from the latch circuit 43 is supplied to a series circuit of delay circuits 11a and 11b and output data from the latch circuit 45 is supplied to a delay circuit 11c. Outputs of the delay circuits 11a, 11b and 11c are supplied through respective coefficient multipliers 11d, 11e and 11f to an adder 11g. In the equaliser circuit 12, output data from the latch circuit 43 is supplied to a series circuit of delay circuits 12a and 12b, and output data from the latch circuit 45 is supplied to a series circuit of delay circuits 12c and 12d. Outputs of the delay circuits 12b, 12c and 12d are supplied through respective coefficient multipliers 12e, 12f and 12g to an adder 12h. The coefficient multipliers 11d, 11e and 11f and the coefficient multipliers 12e, 12f and 12g are operative to multiply the respective delayed data supplied thereto by coefficients $K_1$, $K_2$ and $K_3$, respectively.

Thus, the two equaliser circuits 11 and 12 constitute respective transversal filters and the adders 11g and 12h provide respective equalised signals. By adjusting the coefficients $K_1$, $K_2$ and $K_3$ employed in the coefficient multipliers 11d, 11e and 11f, and in the coefficient multipliers 12e, 12f and 12g of the equaliser circuits 11 and 12, the equalising level is changed. Each of the delay circuits 11a, 11b, 11c, 12a, 12b, 12c and 12d is formed by a latch circuit which delays an input signal by a delay time of one clock having the frequency of 20 MHz.

Outputs of the equaliser circuits 11 and 12 are supplied to the processing circuit 21 which performs the $(1 + D)$ calculation so as to obtain the processed data of the odd sequence. More specifically, the output data of the equaliser circuit 11 is supplied through a series circuit of delay circuits 21a and 21b to one input terminal of an adder 21c, and the output of the equaliser circuit 12 is supplied through a delay circuit 22a to the other input terminal of the adder 21c. An added or sum output of the adder 21c is supplied through a delay circuit 21d to an input terminal 23a of the Viterbi decoder circuit 23 (Figure 4) in the respective channel. In other words, the output of the delay circuit 21d is supplied to the Viterbi decoder circuit 23 which Viterbi-decodes the odd sequence data constituting the output of the processing circuit 21.

The outputs of the equaliser circuits 11 and 12 are also supplied to the processing circuit 22 which performs the $(1 + D)$ calculation so as to obtain the processed data of the even sequence. More specifically, the output of the delay circuit 21a in the odd sequence data processing circuit 21 is supplied to one input terminal of an adder 22b, and an output of the delay circuit 22a is supplied to the other input terminal of the adder 22b. An added or sum output of the adder 22b is supplied through a delay circuit 22c to an input terminal 24a of the Viterbi decoder circuit 24 (Figure 4). In other words, the output of the delay circuit 22c is supplied to the Viterbi decoder circuit 24 which Viterbi-decodes the even sequence data constituting the output of the processing circuit 22.

Each of the delay circuits 21a, 21b and 21d, and each of the delay circuits 22a and 22c in the processing circuits 21 and 22 respectively, is formed of a latch circuit which delays the input signal supplied thereto by a delay time of one clock period of the clock signal having a frequency of 20 MHz.

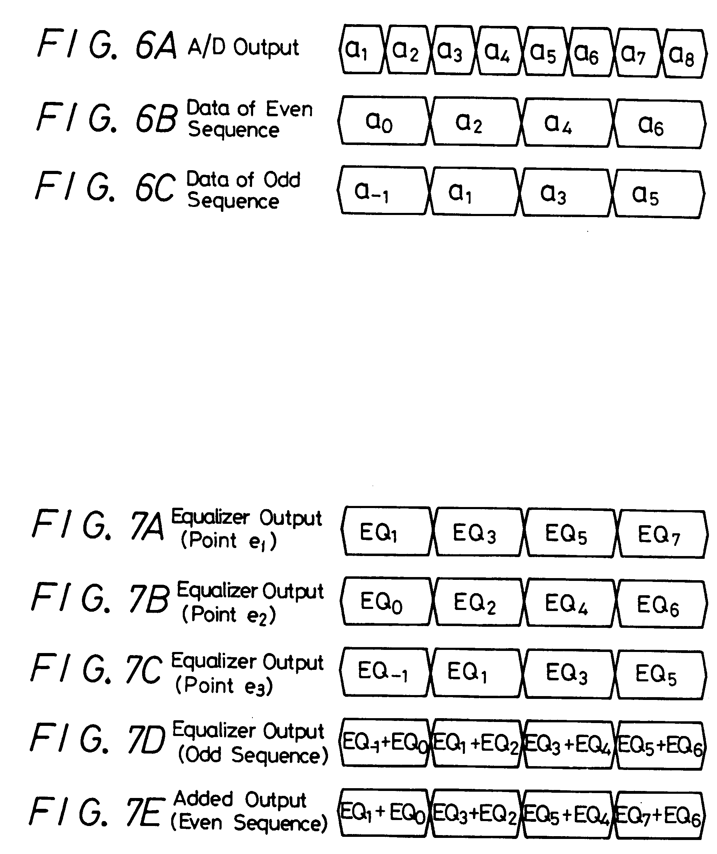

Operation of the above embodiment of the invention will now be described with reference to Figures 6A to 6C and Figures 7A to 7E.

If it is assumed that digital data $a_1$, $a_2$, $a_3$, ..... are output with a sampling frequency of 40 MHz from the A/D converter 6, as shown in Figure 6A, then such digital data will be divided into data $a_0$, $a_2$, $a_4$ ....., of even sequence (Figure 6B) and data $a_{-1}$, $a_1$, $a_3$, ..... of odd sequence (Figure 6C). The data shown in Figure 6B represents the output of the latch circuit 43 and the data shown in Figure 6C represents the output of the latch circuit 44. Since the digital data are divided into the even sequence data and the odd sequence data, as described above, the sampling frequency of each of the even or odd sequence data becomes 20 MHz (namely one-half of the sampling frequency of 40 MHz of the original data). Further, by delaying the odd sequence data by means of the latch circuit 44, the even sequence data and the odd sequence data are synchronised with each other.

The separated even sequence data and odd sequence data are then supplied to the respective transversal filter or equaliser circuits 11 and 12, thereby generating equalised data EQ which are separately equalised for the odd and even sequences. More specifically, assuming that data $EQ_1$, $EQ_3$, $EQ_5$, ..... obtained at a junction or point $e_1$ corresponding to the output of the delay circuit 21a, are considered to be the output of the equaliser circuit 11, as shown in Figure 7A, then data $EQ_0$, $EQ_2$, $EQ_4$, ..... are obtained at a point $e_2$, corresponding to the output of the delay circuit 22a at the same timing, and may be considered to be the output of the equaliser circuit 12, as shown in Figure 7B. Further, at the same timing, as shown in Figure 7C, data $EQ_{-1}$, $EQ_1$, $EQ_3$, ..... will be obtained at a point $e_3$ corresponding to the output of the delay circuit 21b.

The added or sum output of the adder 21c in the processing circuit 21 is simply the sum of the signals at the points $e_2$ and $e_3$, and hence becomes the data $EQ_{-1} + EQ_0$, $EQ_1 + EQ_2$, $EQ_3 + EQ_4$, ..... as shown in Figure 7D. This added output is supplied to the Viterbi decoder circuit 23 which decodes the odd sequence data as data processed by $(1 + D)$.

Similarly, the added or sum output of the adder 22b in the processing circuit 22 is simply the sum of the signals at

the points $e_1$ and $e_2$, and hence becomes the data $EQ_1 + EQ_0$, $EQ_3 + EQ_2$, $EQ_5 + EQ_4$, ..... as shown in Figure 7E. This added output is supplied to the Viterbi decoder circuit 24 which decodes the even sequence data as data processed by (1 + D).

The odd sequence and even sequence data are separately decoded by the two Viterbi decoder circuits 23 and 24, and are then composed into data of one sequence by operation of the switch 25.

It will be seen that, in the data detecting circuit according to this embodiment of the invention, the reproduced signal is converted into digital data by the A/D converter 6 before being equalised so that the transversal filter or equaliser circuits 11 and 12 and the processing circuits 21 and 22, each of which performs the calculation of (1 + D), can be fabricated as digital circuits. Accordingly, the digital equaliser circuits 11 and 12 and the digital processing circuits 21 and 22 can be provided with stable characteristics which can be adjusted with ease. Further, since the equaliser circuits 11 and 12 and the processing circuits 21 and 22 are arranged in respective channels to divide the data into odd sequence data and even sequence data, the digital signal having a sampling frequency of 40 MHz is equalised using a clock frequency which is one-half the sampling frequency, that is, a clock frequency of 20 MHz, and the (1 + D) calculation or processing is also performed at such reduced frequency. Therefore, a simplified digital data detecting circuit which is operable by a clock signal of relatively low frequency can be employed, that is, there is no need to provide a special circuit which is operated by a clock signal of high frequency.

While the reproduced data is divided into data of two channels, that is, odd sequence data and even sequence data in the above described embodiment, it will be appreciated that the reproduced data may be divided into data of three or more channels thereby to further lower the clock frequency.

Although the present invention has been described as being applied to the reproducing circuit of a digital VTR, it is not limited thereto and may be applied to other digital devices.

Since the above described digital data detecting apparatus employing the partial response scheme and the Viterbi decoding system can be incorporated in a simple circuit operated by a clock signal of relatively low frequency, it will be apparent that the digital data detecting apparatus embodying the present invention can be applied to a consumer digital VTR which, of necessity, is limited in cost.

## Claims

1. Apparatus for detecting input digital data, the apparatus comprising:

   processing means (21, 22) for processing the digital data in accordance with a predetermined formula (1 + D);
   decoder means (23, 24) for decoding an output of the processing means (21, 22) in accordance with the Viterbi algorithm, the decoder means (23, 24) comprising first and second decoders (23, 24) for odd and even numbered data samples of the digital data; and
   means (25) for composing outputs of said decoder means (23, 24) to obtain digital data in one sequence;

   characterised in that:

   distributing means (41, 42) is provided for distributing said input digital data among first and second channels, respectively for odd and even numbered data samples; and
   the processing means comprises first and second processors (21, 22) respectively in said first and second channels for processing the respective data samples in accordance with the predetermined formula (1 + D) using both odd and even numbered data samples, the opposite sense data samples for each channel being derived from the other channel via crosswise connections between the channels for combination with the sample being processed in the respective channel.

2. Apparatus according to claim 1, wherein said predetermined formula (1 + D) is derived from a partial response detection scheme.

3. Apparatus according to claim 2, wherein said partial response detection scheme is a class IV partial response.

4. Apparatus according to claim 1, claim 2 or claim 3, comprising means (6,7) deriving said input digital data from a binary signal of analog form reproduced from a magnetic medium (1) by a magnetic head (2), and wherein said predetermined formula is [1 + D] in which D is a delay operator.

5. Apparatus according to claim 4, wherein said means deriving said input digital data from said reproduced binary signal of analog form includes analog-to-digital converting means (6) having a predetermined sampling frequency, and wherein said distributing means includes first and second latch means (41,42) receiving said input digital data from said converting means (6), means (40) providing a latching signal to said first latch means (41) with a frequency which is one-half said sampling frequency, means inverting said latching signal and applying the inverted latching signal to said second latch means (42) so that said first and second latch means (41,42) are operable to latch odd and even numbered sequences, respectively, of said input digital data, and third latch means (44) in series with said second latch means (42) and also receiving said latching signal for synchronising sequences of digital data applied through said first and third latch means (41,44) to one channel and to the other channel.

6. Apparatus according to any one of claims 1 to 4, comprising means (2,3) for reproducing a binary signal recorded in analog form on a magnetic medium (1), and analog-to-digital converting means (6) for deriving said input digital data from the reproduced binary signal in analog form in advance of said distributing means (41,42).

7. Apparatus according to any one of the preceding claims, comprising equaliser means constituting a transversal filter (11, 12) in each of said channels between said distributing means (41,42) and the processing means (21,22) in the respective channel, each transversal filter (11, 12) using both odd and even numbered data samples, the opposite sense data samples for each channel being derived from the other channel via crosswise connections between the channels.

8. Apparatus according to claim 7 as dependent on claim 5 or claim 6, wherein said analog-to-digital converting means (6) has a predetermined sampling frequency, and wherein said equaliser means (11,12) and said processing means (21,22) in each of said channels is operable by a clock having a frequency which is a fraction of said sampling frequency.

9. Apparatus according to claim 1, claim 2 or claim 3, comprising playback means (2,3) including a magnetic head (2) for reproducing said signal recorded on said magnetic medium (1), and analog-to-digital converter means (6) for converting an output of said playback means (2,3) into digital data in the form of odd and even numbered data samples.

10. Apparatus according to claim 9, comprising equaliser means functioning as a transversal filter (11, 12) in each of said channels between said distributing means (41,42) and the processing means (21,22) in the respective channel, each transversal filter (11, 12) using both odd and even numbered data samples, the opposite sense data samples for each channel being derived from the other channel via crosswise connections between the channels.

11. Apparatus according to claim 10, wherein said analog-to-digital converter means (6) has a predetermined sampling frequency, and wherein said equaliser means (11,12) and said processing means (21,22) in each of said channels is operable by a clock having a frequency which is one-half of said sampling frequency.

## Patentansprüche

1. Gerät zum Erfassen von Eingangsdigitaldaten, wobei das Gerät aufweist:

- eine Verarbeitungseinrichtung (21, 22) zum Verarbeiten der Digitaldaten gemäß einer vorbestimmten Formel (1 + D),
- eine Dekodiereinrichtung (23, 24) zum Dekodieren eines Ausgangssignals der Verarbeitungseinrichtung (21, 22) gemäß dem Viterbi-Algorithmus, wobei die Dekodiereinrichtung (23, 24) erste und zweite Dekodierer (23, 24) für ungeradzahlige und geradzahlige Datenmuster der Digitaldaten aufweist, und
- einer Einrichtung (25) zum Zusammensetzen von Ausgangssignalen der Dekodiereinrichtung (23, 24), um Digitaldaten in einer Folge zu erhalten,

dadurch gekennzeichnet, daß

- eine Verteileinrichtung (41, 42) vorgesehen ist, um die Eingangsdigitaldaten auf einen ersten und einen zweiten Kanal jeweils für ungeradzahlige und geradzahlige Datenmuster zu verteilen und
- die Verarbeitungseinrichtung im ersten und im zweiten Kanal jeweils einen ersten und einen zweiten Prozessor (21, 22) aufweist, um die jeweiligen Datenmuster gemäß der vorbestimmten Formel (1 + D) zu verarbeiten, die die ungeradzahligen und geradzahligen Datenmuster beide verwendet, wobei die entgegengerichteten Datenmuster für jeden Kanal vom anderen Kanal mittels Überkreuzverbindungen zwischen den Kanälen zum Kombinieren mit dem zu verarbeitenden Muster in dem jeweiligen Kanal abgeleitet werden.

**2.** Gerät nach Anspruch 1, bei dem die vorbestimmte Formel (1 + D) von einem Teilantwort-Erfassungschema abgeleitet ist.

**3.** Gerät nach Anspruch 2, bei dem das Teilantwort-Erfassungschema eine Klasse-IV-Teilantwort ist.

**4.** Gerät nach Anspruch 1, Anspruch 2 oder Anspruch 3, mit einer Einrichtung (6, 7), die die Eingangsdigitaldaten von einem Binärsignal von analoger Form ableitet, das von einem Magnetmedium (1) mittels eines Magnetkopfes (2) wiedergegeben ist, und bei dem die vorbestimmte Formel [1 + D] ist, wobei D ein Verzögerungsoperator ist.

**5.** Gerät nach Anspruch 4, bei dem die Einrichtung, die das Eingangsdigitalsignal von dem in analoger Form wiedergegebenen Binärsignal ableitet, eine Analog/Digital-Umwandlungseinrichtung (6) enthält, die eine vorbestimmte Abtastfrequenz aufweist, und bei der die Verteileinrichtung eine erste und eine zweite Zwischenspeichereinrichtung (41, 42) die die Eingangsdigitaldaten von der Umwandlungseinrichtung (6) empfängt, eine Einrichtung (40), die ein Zwischenspeichersignal für die erste Zwischenspeichereinrichtung (41) mit einer Frequenz, die die Hälfte der Abtastfrequenz beträgt, vorsieht, eine Einrichtung, die das Zwischenspeichersignal invertiert und das invertierte Zwischenspeichersignal der zweiten Zwischenspeichereinrichtung (42) zuführt, so daß die erste und die zweite Zwischenspeichereinrichtung (41, 42) betreibbar ist, um ungeradzahlige und geradzahlige Folgen der Eingangsdigitaldaten jeweils zwischenzuspeichern, und eine dritte Zwischenspeichereinrichtung (44) in Serie mit der zweiten Zwischenspeichereinrichtung (42) enthält und die auch das Zwischenspeichersignal empfängt, um Folgen von Digitaldaten zu synchronisieren, die über die erste und die dritte Zwischenspeichereinrichtung (41, 44) dem einen Kanal und dem anderen Kanal zugeführt werden.

**6.** Gerät nach einem der Ansprüche 1 bis 4, mit einer Einrichtung (2, 3), um ein Binärsignal wiederzugeben, das in analoger Form auf einem Magnetmedium (1) aufgezeichnet ist, und einer Analog/Digital-Umwandlungseinrichtung (6), um das Eingangsdigitalsignal vom in analoger Form wiedergegebenen Binärsigal vor der Verteileinrichtung (41, 42) abzuleiten.

**7.** Gerät nach einem der vorhergehenden Ansprüche, mit einer Entzerreinrichtung, die ein Transversalfilter (11, 12) in jedem der Kanäle zwischen der Verteileinrichtung (41, 42) und der Verarbeitungseinrichtung (21, 22) in dem jeweiligen Kanal bildet, wobei jedes Transversalfilter (11, 12) beide, ungeradzahlige und geradzahlige Datenmuster, verwendet, wobei die gegeneinandergerichteten Datenmuster für jeden Kanal vom anderen Kanal mittels Überkreuzverbindungen zwischen den Kanälen abgeleitet werden.

**8.** Gerät nach Anspruch 7 als Abhängigkeit von Anspruch 5 oder Anspruch 6, bei dem die Analog/Digital-Umwandlungseinrichtung (6) eine vorbestimmte Abtastfrequenz aufweist, und bei dem die Entzerreinrichtung (11, 12) und die Verarbeitungseinrichtung (21, 22) in jedem Kanal mittels einem Zeittakt betreibbar ist, der eine Frequenz aufweist, die ein Bruchteil der Abtastfrequenz ist.

**9.** Gerät nach Anspruch 1, Anspruch 2 oder Anspruch 3 mit einer Abspieleinrichtung (2, 3), die einen Magnetkopf (2) zum Wiedergeben des auf dem Magnetmedium (1) aufgezeichneten Signals und einer Analog/Digital-Umwandlungseinrichtung (6) zum Umwandeln eines Ausgangssignals der Abspieleinrichtung (2, 3) in Digitaldaten in die Form von ungeradzahligen und geradzahligen Datenmustern.

**10.** Gerät nach Anspruch 9, mit einer Entzerreinrichtung, die als Transversalfilter (11, 12) in jedem der Kanäle zwischen der Verteileinrichtung (41, 42) und der Verarbeitungseinrichtung (21, 22) in dem jeweiligen Kanal arbeitet, wobei jedes Transversalfilter (11, 12) beide, ungeradzahlige und geradzahlige Datenmuster, verwendet, wobei die gegeneinandergerichteten Datenmuster für jeden Kanal von dem anderen Kanal mittels Überkreuzverbindungen der Kanäle abgeleitet werden.

**11.** Gerät nach Anspruch 10, beidem die Analog/Digital-Umwandlungseinrichtung (6) eine vorbestimmte Abtastfrequenz aufweist, und bei dem die Entzerreinrichtung (11, 12) und die Verarbeitungseinrichtung (21, 22) in jedem der Kanäle mittels eines Zeittaktes betreibbar ist, der eine Frequenz aufweist, die die Hälfte der Abtastfrequenz beträgt.

**Revendications**

1. Dispositif pour détecter des données numériques d'entrée, le dispositif comprenant :

   un moyen de traitement (21, 22) pour traiter les données numériques suivant une formule prédéterminée (1 + D);
   un moyen décodeur (23, 24) pour décoder une sortie du moyen de traitement (21, 22) suivant l'algorithme de Viterbi; le moyen décodeur (23, 24) comprenant des premier et second décodeurs (23, 24) pour des échantillons de données de rangs impair et pair des données numériques ; et
   un moyen (25) pour composer des sorties dudit moyen décodeur (23, 24) pour obtenir des données numériques en une seule séquence ;

   caractérisé:

   en ce qu'il est prévu un moyen de répartition (41, 42) pour répartir lesdites données numériques d'entrée entre des première et seconde voies, pour, respectivement, des échantillons de données de rangs impair et pair ; et en ce que le moyen de traitement comprend des premier et second processeurs (21, 22), respectivement, dans lesdites première et seconde voies pour traiter les échantillons de données respectifs suivant la formule prédéterminée (1 + D) en utilisant des échantillons de données à la fois de rangs impair et pair, les échantillons de données de sens opposés pour chaque voie étant obtenus, respectivement, à partir de l'autre voie, par l'intermédiaire de connexions croisées entre les voies, pour combinaison avec l'échantillon en cours de traitement dans la voie respective.

2. Dispositif selon la revendication 1, dans lequel ladite formule (1 + D) prédéterminée s'obtient à partir d'un système de détection à réponse partielle.

3. Dispositif selon la revendication 2, dans lequel ledit système de détection à réponse partielle est une réponse partielle de classe IV.

4. Dispositif selon la revendication 1, la revendication 2, ou la revendication 3, comprenant un moyen (6, 7) obtenant lesdites données numériques d'entrée à partir d'un signal binaire de forme analogique reproduit à partir d'un support magnétique (1) par une tête magnétique (2), et dans lequel ladite formule prédéterminée est [1 + D] où D est un opérateur de retardement.

5. Dispositif selon la revendication 4, dans lequel ledit moyen d'obtention desdites données numériques d'entrée à partir dudit signal binaire reproduit de forme analogique comprend un moyen de conversion d'analogique en numérique (6) ayant une fréquence d'échantillonnage prédéterminée, et dans lequel ledit moyen de repartition comprend des premier et deuxième moyens formant verrous (41, 42) recevant lesdites données numériques d'entrée dudit moyen convertisseur (6), un moyen (40) délivrant un signal de verrouillage audit premier moyen formant verrou (41) avec une fréquence qui est la moitié de ladite fréquence d'échantillonnage, un moyen d'inversion dudit signal de verrouillage et d'application du signal de verrouillage inversé au deuxième moyen formant verrou (42) de sorte que lesdits premier et deuxième moyens formant verrous (41, 42) servent à verrouiller, respectivement, des séquences de rangs impair et pair desdites données numériques d'entrée, et un troisième moyen formant verrou (44) en série avec ledit deuxième moyen formant verrou (42) et recevant également ledit signal de verrouillage pour synchroniser les séquences de données numériques appliquées par l'intermédiaire desdits premier et troisième moyens formant verrous (41, 44) à une voie et à l'autre voie.

6. Dispositif selon l'une quelconque des revendications 1 à 4, comprenant un moyen (2, 3) pour reproduire un signal binaire enregistré en forme analogique sur un support magnétique (1), et un moyen de conversion d'analogique en numérique (6) pour obtenir lesdites données numériques d'entrée, à partir du signal binaire reproduit de forme analogique, en amont dudit moyen de répartition (41, 42).

7. Dispositif selon l'une quelconque des revendications précédentes, comprenant un moyen égaliseur constituant un filtre transversal (11, 12) dans chacune desdites voies entre ledit moyen de répartition (41, 42) et le moyen de traitement (21, 22) dans la voie respective, chaque filtre transversal (11, 12) utilisant à la fois des échantillons de données de rangs impair et pair, les échantillons de données de sens opposé pour chaque voie étant obtenus à partir de l'autre voie par des connexions croisées entre les voies.

**8.** Dispositif selon la revendication 7, lorsqu'elle dépend de la revendication 5 ou de la revendication 6, dans lequel ledit moyen de conversion d'analogique en numérique (6) a une fréquence d'échantillonnage prédéterminée, et dans lequel ledit moyen égaliseur (11, 12) et ledit moyen de traitement (21, 22) de chacune desdites voies peuvent être mis en oeuvre par un signal d'horloge ayant une fréquence qui est une fraction de ladite fréquence d'échantillonnage.

**9.** Dispositif selon la revendication 1, la revendication 2 ou la revendication 3, comprenant un moyen de lecture (2, 3) incluant une tête magnétique (2) pour reproduire ledit signal enregistré sur ledit support magnétique (1) et un moyen convertisseur d'analogique en numérique (6) pour convertir une sortie dudit moyen de lecture (2, 3) en données numériques sous la forme d'échantillons de données de rangs impair et pair.

**10.** Dispositif selon la revendication 9, comprenant un moyen égaliseur fonctionnant comme un filtre transversal (11, 12) dans chacune desdites voies entre ledit moyen de répartition (41, 42) et le moyen de traitement (21, 22) dans la voie respective, chaque filtre transversal (11, 12) utilisant à la fois des échantillons de données de rangs impair et pair, les échantillons de données de sens opposé pour chaque voie étant obtenus à partir de l'autre voie par des connexions croisées entre les voies.

**11.** Dispositif selon la revendication 10, dans lequel ledit moyen de conversion d'analogique en numérique (6) a une fréquence d'échantillonnage prédéterminée, et dans lequel ledit moyen égaliseur (11, 12) et ledit moyen de traitement (21, 22) de chacune desdites voies peuvent être mis en oeuvre par un signal d'horloge ayant une fréquence qui est la moitié de ladite fréquence d'échantillonnage.

*F I G. 1*

*F I G. 2*

EP 0 452 064 B1

FIG. 3

FIG. 4

# F I G. 5

# F I G. 5A

FIG.5A | FIG.5B

## F I G. 5B

FIG. 6A A/D Output

$a_1$ $a_2$ $a_3$ $a_4$ $a_5$ $a_6$ $a_7$ $a_8$

FIG. 6B Data of Even Sequence

$a_0$ $a_2$ $a_4$ $a_6$

FIG. 6C Data of Odd Sequence

$a_{-1}$ $a_1$ $a_3$ $a_5$

FIG. 7A Equalizer Output (Point $e_1$)

$EQ_1$ $EQ_3$ $EQ_5$ $EQ_7$

FIG. 7B Equalizer Output (Point $e_2$)

$EQ_0$ $EQ_2$ $EQ_4$ $EQ_6$

FIG. 7C Equalizer Output (Point $e_3$)

$EQ_{-1}$ $EQ_1$ $EQ_3$ $EQ_5$

FIG. 7D Equalizer Output (Odd Sequence)

$EQ_{-1}+EQ_0$ $EQ_1+EQ_2$ $EQ_3+EQ_4$ $EQ_5+EQ_6$

FIG. 7E Added Output (Even Sequence)

$EQ_1+EQ_0$ $EQ_3+EQ_2$ $EQ_5+EQ_4$ $EQ_7+EQ_6$